# EUROPEAN PATENT APPLICATION

(11) **EP 2 778 958 A1**
(43) Date of publication of application: **17.09.2014**
(21) Application number: 13738096.0
(22) Date of filing: 11.01.2013
(51) Int. Cl.: G06F 17/30

(54) **WEB PAGE DISPLAY METHOD AND SYSTEM**

(30) Priority: 17.01.2012 CN 201210013869
(71) Applicant: Tencent Technology (Shenzhen) Company Limited, Shenzhen, Guangdong 518044 (CN)
(72) Inventor: WANG, Lei, Shenzhen Guangdong 518044 (CN); PENG, Xiaoyu, Shenzhen Guangdong 518044 (CN); YANG, Zaijing, Shenzhen Guangdong 518044 (CN)
(74) Representative: Johnson, Richard Alan
(86) International application number: PCT/CN2013/070363
(87) International publication number: WO 2013/107324

(57) **Abstract**

Disclosed is a web page display method and system. The method comprises: saving for a web page a display parameter corresponding to a time period; when a request for accessing the web page is received, searching for a display parameter of the web page corresponding to a time period to which the current time belongs; displaying the web page according to the found display parameter. The system comprises: a setting module, used for saving for a web page a display parameter corresponding to a time period; a searching module, used for searching for a display parameter of the web page corresponding to a time period to which the current time belongs when a request for accessing the web page is received; a display module, used for displaying the web page according to the display parameter found by the searching module. The present disclosure can facilitate user operation and improve the operation efficiency.

## Description

### CROSS REFERENCE TO RELATED APPLICATIONS

The present application claims the benefit of priority to China patent application No.201210013869.0 filed in the Chinese Patent Office on January 17, 2012 and entitled "WEB PAGE DISPLAY METHOD AND SYSTEM", the content of which is hereby incorporated by reference in its entirety.

### FIELD OF THE TECHNICAL

The present disclosure relates to web page data processing technology field, and specifically, to a web page display method and system.

### BACKGROUND

With a rise of a social network service (SNS) website, more and more users begin to use the SNS website. On the SNS website, each user can have her or his web page. The web page is also named personally customized web presence, the web page may be a home page. The user and other users can visit the web page. The web page can display many functional components, such as personal profile, latest development, blog list, album, micro blog, medium player, and personal application. Different functional component is configured to displaying and/or processing different user information.

There are many kinds of functional components, and the user can select some most common used functional components to display on the website for conveniently use and communication. In the current web page display technology, the user is authorized to preset and save a display parameter of the web page. The display parameter of the web page may include an icon of the web page component which is needed to display, display area information and etc. The display parameter of the web page may also include format information of the web page, color of the web page, style of the web page, etc. When the web page of the user is visited, the web page is displayed according to the saved display parameter. When the user changes the display parameter, the web page is displayed according to the new display parameter.

### SUMMARY

The present disclosure provides web page display method and system for facilitating user operation and improving operation efficiency.

The exemplary embodiments of present disclosures are realized as the follows.

A web page display method, including:
saving for web page a display parameters corresponding to time periods, each display parameter corresponding to one time period;
receiving a request for accessing the web page, and searching for, from the display parameter saved, a display parameter of the web page corresponding to a time period to which the current time belongs; and displaying the web page according to the display parameter searched.

A web page display system, comprising:
a setting module, configured to saving for a web page display parameters, each display parameter corresponding to one time period;
a searching module, configured to searching for, from the display parameters saved, a display parameter of the web page corresponding to a time period to which the current time belongs, when a request for accessing the web page is received; and
a display module, configured to displaying the web page according to the display parameter searched by the searching module.

In the present disclosure, the display parameter corresponding to a time period is set and saved. When a request for accessing the web page is received, a display parameter of the web page corresponding to the time period is searched for, and the web page is displayed according to the display parameter searched. In the exemplary embodiments of present disclosure, the user only needs to set the display parameter of each time period one time. When the user or other visitor accesses the personally customized web page, the web page is automatically displayed according to the time period. Thus, the user does not need to reset the display parameter, and a need of displaying different web page in different time period is satisfied. Compared with current technology, the present disclosure can facilitate user operation and improve the operation efficiency. Further, a personalized display need in different time period is satisfied.

### BRIEF DESCRIPTION OF THE DRAWINGS

FIG. 1 is a flowchart of a web page display method according to an exemplary embodiment of present disclosure.
FIG.2 is a flowchart of a web page display method according to another exemplary embodiment of present disclosure.
FIG.3 is a schematic diagram of a web page display system according to an exemplary embodiment of present disclosure.
FIG.4 is a flowchart of a setting display parameter method according to an exemplary embodiment of present disclosure.
FIG.5 is a schematic diagram of a display parameter setting interface according to an exemplary embodiment of present disclosure.
FIG.6 is a schematic diagram of a display parameter setting interface according to another exemplary embodiment of present disclosure.
FIG.7 is a schematic diagram of a display parameter setting interface according to yet another exemplary embodiment of present disclosure.
FIG.8 is a schematic diagram of a storage structure of the display parameter corresponding to different time period of the web page according to an exemplary embodiment of present disclosure.
FIG.9 is a flowchart of a web page display method according to yet another exemplary embodiment of present disclosure.
FIG.10 is a schematic diagram of a web page display system according to another exemplary embodiment of present disclosure.

### DETAILED DESCRIPTION OF ILLUSTRATED EMBODIMENTS

Reference throughout this specification to "one embodiment," "an embodiment," "specific embodiment," or the like in the singular or plural means that one or more particular features, structures, or characteristics described in connection with an embodiment is included in at least one embodiment of the present disclosure. Thus, the appearances of the phrases "in one embodiment" or "in an embodiment" "in a specific embodiment," or the like in the singular or plural in various places throughout this specification are not necessarily all referring to the same embodiment. Furthermore, the particular features, structures, or characteristics may be combined in any suitable manner in one or more embodiments.

One exemplary embodiment of present disclosure is applied to display a personal web page provided by the SNS website. The web page display method of other embodiment can be applied to other web page which content and/or appearance are (is) user-defined.

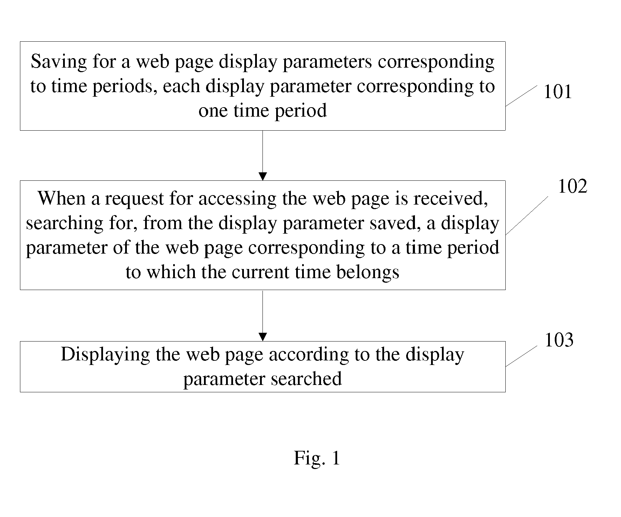

Referring to FIG.1, FIG.1 is a flowchart of a web page display method according to an exemplary embodiment of present disclosure. As shown in FIG.1, the web page display method of the exemplary embodiment includes the following steps.

Step 101, saving for a web page display parameters corresponding to time periods, each display parameter corresponding to one time period.

Step 102, when a request for accessing the web page is received, searching for, from the display parameter saved, a display parameter of the web page corresponding to a time period to which the current time belongs.

Step 103, displaying the web page according to the display parameter searched.

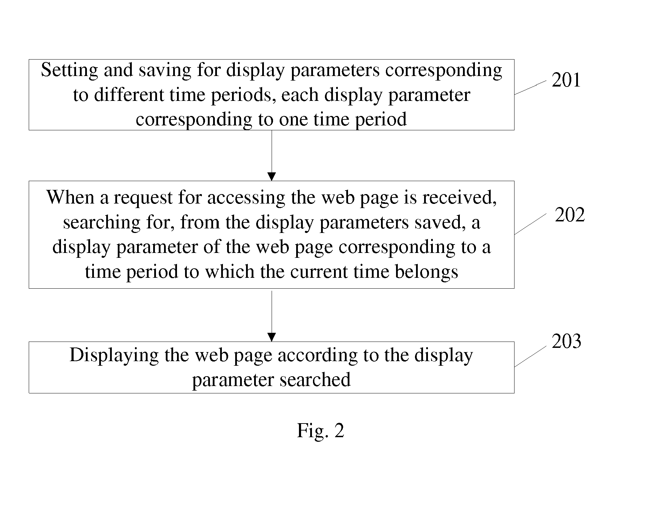

Referring to FIG.2, FIG.2 is a flowchart of a web page display method according to another exemplary embodiment of present disclosure. As shown in FIG.2, the web page display method of the exemplary embodiment mainly includes the following steps.

Step 201, setting and saving for display parameters corresponding to different time periods, each display parameter corresponding to one time period.

The display parameter can be set by the user through a user device, or can be stored in the user device, or can be transmitted to a sever through network and stored in the server. The display parameter can include but not limited to corresponding time period information. A corresponding relationship between the display parameter and the time period information is established and stored. There are many detailed ways of realizing the corresponding relationship, such as the corresponding relationship is a mapping relationship. In the mapping relationship, each display parameter is corresponding to one or more time period information. The time period information can be obtained, when the display parameter is obtained. Or the display parameter is obtained, when the time period information is obtained. It is understood to a person of original skill in the art, the corresponding relationship between the display parameter and the time period information is not limited to any detailed way here.

Step 202, when a request for accessing the web page is received, searching for, from the display parameters saved, a display parameter of the web page corresponding to a time period to which the current time belongs. For example, the display parameters may be saved in the user device.

Step 203, displaying the web page according to the display parameter searched.

Each step of each method can be accomplished by a device or a module, or can be corporately accomplished by several devices or several modules. For example, the step 203 can be accomplished by the server providing the display parameter and web page data or web page data obtained by the display parameter to a client, and the client displaying the web page to the user.

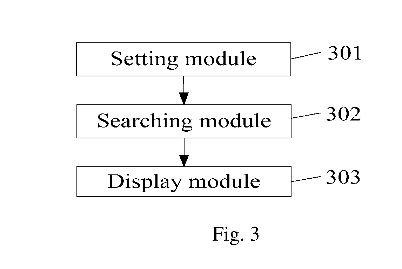

Correspondingly, a web page display system is provided in the present disclosure. Referring to FIG.3, FIG.3 is a schematic diagram of a web page display system according to an exemplary embodiment of present disclosure. As shown in the FIG.3, the web page display system includes the following modules.

A setting module 301, configured to set and save for a web page display parameters, each display parameter corresponding to one time period.

A searching module 302, configured to search for, from the display parameters saved, a display parameter of the web page corresponding to a time period to which the current time belongs, when a request for accessing the web page is received.

A display module 303, configured to display the web page according to the display parameter searched by the searching module 302.

In an exemplary embodiment, the web page display system can be set in the SNS website. The setting module 301 can be set in a front page of the SNS website. The searching module 302 and the display module 303 can be set in a background system of the SNS website. In an exemplary embodiment, the web page display method and system can be applied to an Internet system which content and/or appearance are (is) user-defined.

The display parameter includes an icon of a web page component and display area information. The web page component is a component of a system. Usually, each web page component of the system can realize a physical function independently, and a web page component can provide an interface to other web page components. The display module 303 can call display interface information of web page component corresponding to the icon of the web page component which is needed to be displayed. The display interface information is data of describing a display interface, and the display interface information can be restored in the SNS website. The display module 303 further displays the display interface of the web page component in corresponding area according to display area information of the web page component. Herein the term "call display interface information of web page component" means obtaining the pre-stored display interface information of the web page component from a storage device.

The display parameter can also include format information of the web page. The display module 303 can make layout to the web page according to the format information of the web page, call display interface information of corresponding web page component, and display the display interface of the web page component in corresponding area according to display area information of the web page component.

Each module of the system can be realized by a same physic device, or can be realized by different physic devices. The physic device may be a sever, or multiple distributed servers, a client and etc. For example, the setting module 301 and the searching module 302 can be realized by one or multiple servers. The display module 303 can be collectively realized by the sever and the client. In another word, the sever determines the web page component which is to be display according to the display parameter searched, generates web page content data, and provides the web page content data to the client for displaying. Or, the display module 303 can be realized by the client. In another word, the client obtains the display parameter of the web page from the searching module 302 of the server, determines the web page component to be displayed according to the display parameter, obtains the content date of the web page component from the server, generates a web page, and displays the web page to the user. It is understood that the description here is only for taking example, in other embodiment, each module of the system can be realized by other way.

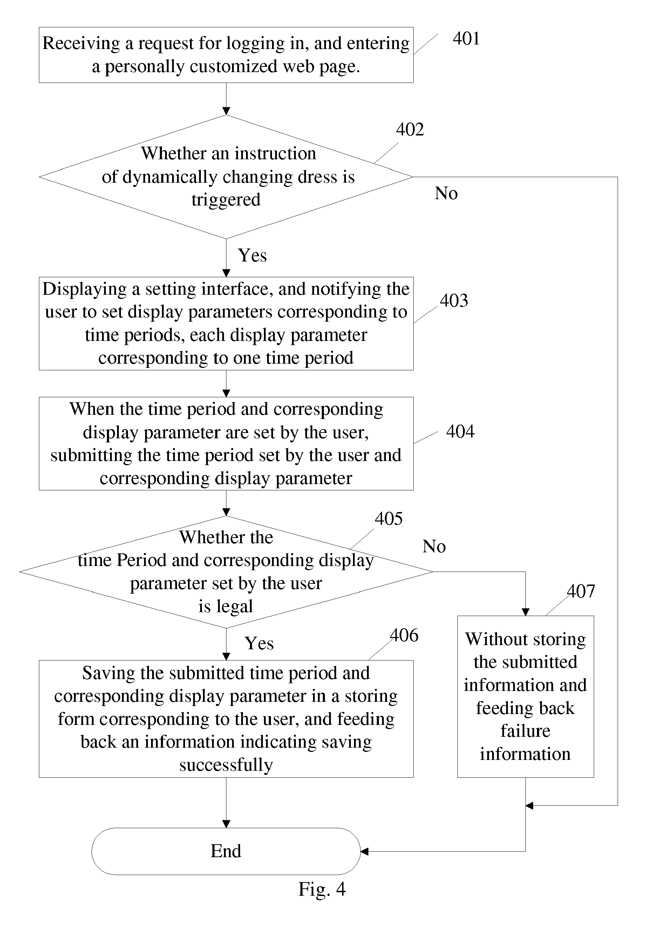

Referring to FIG.4, FIG.4 is a flowchart of a setting display parameter method according to an exemplary embodiment of present disclosure. As shown in FIG.4 the setting display parameter method includes the following steps.

Step 401, receiving a request for logging in, and entering a personally customized web page. The detail technology of logging in can refer to conventional technology. Herein, entering a personally customized web page refers to providing the content of the user's customized web page for the user.

Step 402, determining whether an instruction of dynamically changing dress is triggered. In the embodiment, a process of setting a display parameter corresponding to different time period is dynamically changing dress. A dynamically changing dress widget can be set on the personally customized web page. When the dynamically changing dress widget is detected to be clicked by the user, the instruction of dynamically changing dress is determined to be triggered.

When the instruction of dynamically changing dress is determined to be triggered by the user, a step 403 is implemented; otherwise, a procedure of setting state is ended and other operation is implemented.

Step 403, displaying a setting interface, and notifying the user to set display parameters corresponding to time periods, each display parameter corresponding to one time period. In the embodiment, there are at least two typical setting interfaces.

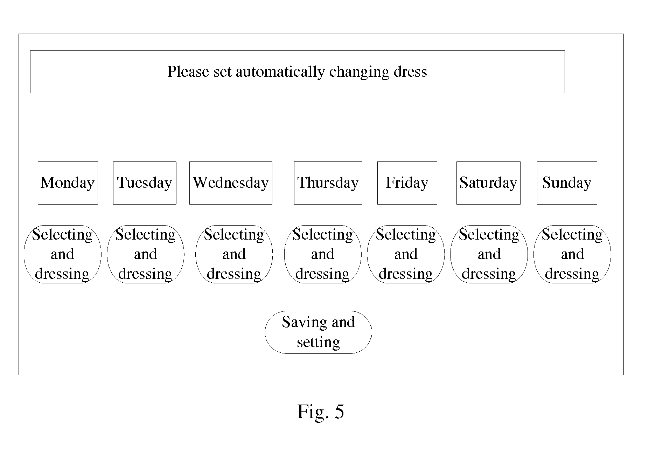

Referring to FIG.5, FIG.5 is a schematic diagram of a typical setting interface according to an exemplary embodiment of present disclosure. The setting interface includes a fixed number of default time periods and corresponding display parameter setting icons. When an operation demand of the web page of the user in different time period is periodical, the set time period is periodical in an embodiment. As the embodiment shown in FIG.5, the display parameter corresponding to each day of one week is provided to the user to set. The default time period is each day of one week, and the number of default time period is seven. The time period does not need to be set by the user, and the time period is automatically generated by the system. In other embodiment, the default time period may be other default time period, such as working time period and nonworking time period of every day. The user can modify the wording time period and the nonworking time period of every day according to the need of the user. Or, the user can set each time period. As shown in FIG.5, each default time period has a corresponding display parameter setting option. In an example, when a selecting and dressing widget corresponding to a time period is detected to be clicked by the user, the display parameter setting interface corresponding to the time period is displayed.

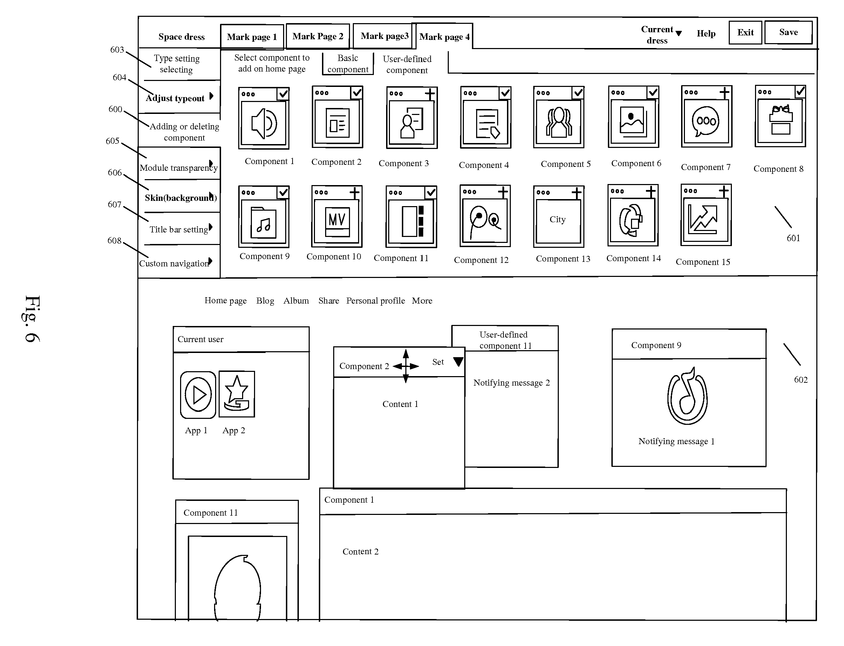

Referring to FIG.6, FIG.6 is a schematic diagram of a display parameter setting interface according to another exemplary embodiment of present disclosure. As shown in FIG.6, the display parameter setting interface includes an adding or deleting component option 600. When the user clicks the adding or deleting component option 600, an icon area 601 of web page component to be selected is displayed, and each icon of each web page component can be displayed in the icon area 601. The web page component can be personal profile component, latest development component, blog list component, album component, micro blog component, music favorite component, personal application component, etc. The system can select some web page components which are to be displayed on the web page according to a selecting instruction of the user. It is understood, the user can also add some user-defined web page component which are to be displayed on the web page. The selected web page component or user-defined component can be displayed on a preview page 602 of the web page. The user can drag a display interface of each web page component in the preview page 602 to adjust the location and size of the display interface in the web page. The location and the size information of the display interface of the web page component in the web page serves as the display area information of the web page component. When the user triggers a saving widget, the icon of the web page component which is selected by the user and the display area information are saved.

The display parameter setting interface can further include a web page format setting option to set the format information of the web page. For example, the web page format setting option shown in FIG.6 includes a type setting selecting option 603 and a layout setting option 604. When the type setting selecting option 603 is selected, type setting information of the web page can be selected. When the layout setting option 604 is selected, layout information of the type setting can be adjusted and set. When a saving widget is triggered by the user, the format information of the web page set through the type setting selecting option 603 and the layout setting option 604 by the user is saved. Detail format information of the web page can refer to current technology, and it is not repeated here.

The display parameter setting interface can further include a module transparency option 605, a skin option 606, a title bar setting option 607, etc. The module transparency option 605, the skin option 606, and the title bar setting option 607 are configured to set aesthetic parameter of the web page. The display parameter setting interface can also include a custom navigation option 608, which is configured to set a web page navigation function for the web page. The detailed setting method of the aesthetic parameter and web page navigation function can refer to current technology, and it is not repeated here.

As shown in FIG.5 and FIG.6, the system sets the display parameter of each time period according to a setting instruction of the display parameter setting option corresponding to the default time period. In an example, the system can set the display parameter of each day of one week. The display parameter of different time period can be the same, or can be different, or can not be set. When the display parameter is not set, the parameter of the time period corresponds to default display parameter of the system.

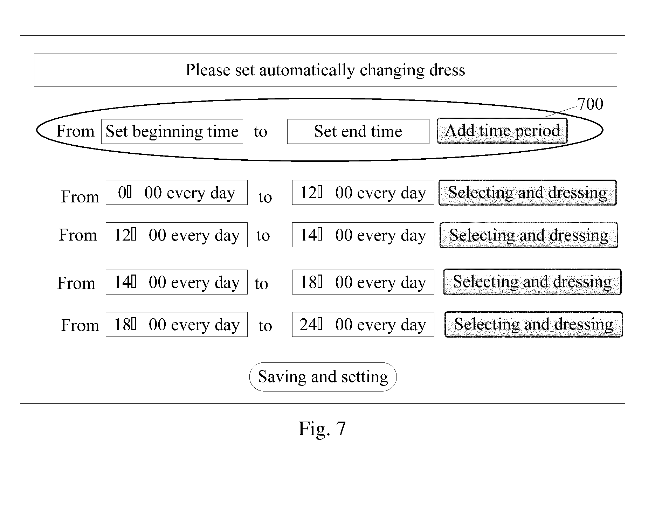

Referring to FIG.7, FIG.7 is a schematic diagram of a display parameter setting interface according to yet another exemplary embodiment of present disclosure. The setting interface includes a time setting option and corresponding display parameter setting option. As shown in FIG.7, the time setting option 700 authorizes the user to add any time period, and set a start time and an end time of the time period. After the user sets the start time and the end time of the time period, the user can add an adding time period widget to add the time period. The added time period displays on the interface bellow. Meanwhile, the display parameter setting option (such as, the selecting and dressing widget) is displayed by the side of the time period. When selecting and dressing widget corresponding to a time period is detected to be clicked by the user, the display parameter setting interface corresponding to the time period is displayed. The display parameter setting interface can refer to FIG.6, and it is not repeated here.

Step 404, when the time period and corresponding display parameter are set by the user, in another word, a saving and setting widget of FIG.5 or FIG.7 are detected to be clicked by the user, submitting the time period set by the user and corresponding display parameter. A detailed submitting method can be realized by a front web program submitting the information to the data server running on the back ground of the SNS website.

Step 405, detecting whether the time period and corresponding display parameter set by the user is legal. If the time period and corresponding display parameter set by the user is legal, a step 406 is implemented; otherwise, a step 407 is implemented.

There are two detailed detecting modes for detecting whether the time period and corresponding display parameter set by the user is legal. One or two of the two detecting modes can be adopted.

A first detecting mode is described as the follows. Detecting whether the web page component need to be displayed of the set display parameter conflicts with each other. If there is a conflict, the display parameter is determined to be not legal, and the display parameter and corresponding time period are not saved. Otherwise, the display parameter is determined to be legal, and the display parameter and corresponding time period are saved.

A second detecting mode is described as the follows. Detecting whether a user right of current user is authorized to set the display parameter set by the user. If the user right of the current user is authorized to set the display parameter, the display parameter is determined to be legal. Otherwise, the display parameter is determined to be not legal, and the display parameter and corresponding time period are not saved.

Step 406, saving the submitted time period and corresponding display parameter in a storing form corresponding to the user, and feeding back information indicating saving successfully, and then ending the procedure of setting state and implementing other operation.

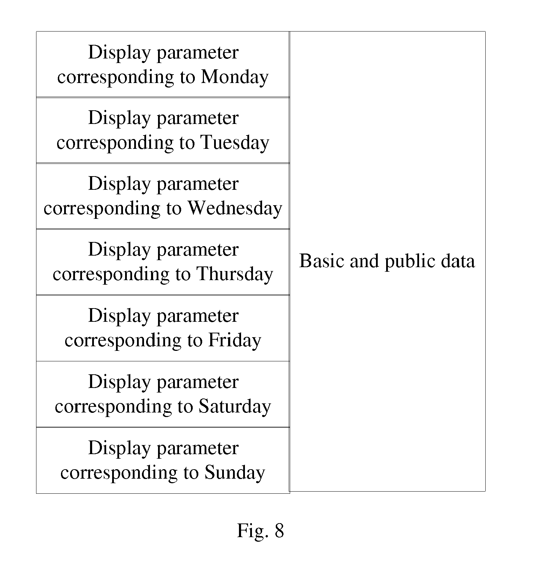

In an exemplary embodiment, saving the submitted time period and corresponding display parameter in a storing form corresponding to the user includes saving the display parameter set by the user associated with corresponding time period in the storing form. Referring to FIG.8, FIG.8 is a schematic diagram of a storage structure of the display parameter corresponding to different time period of the web page according to an exemplary embodiment of present disclosure. As shown in FIG.8, the display parameter is correspondingly stored with basic and public data of the user. The web page display data customized belongs to the user. However, to each time period, each time period is associated stored with the display parameter corresponding to the time period, and the display parameters in each time period are stored in parallel.

Step 407, without storing the submitted information and feeding back failure information, and then ending the procedure of setting state and implementing other operation.

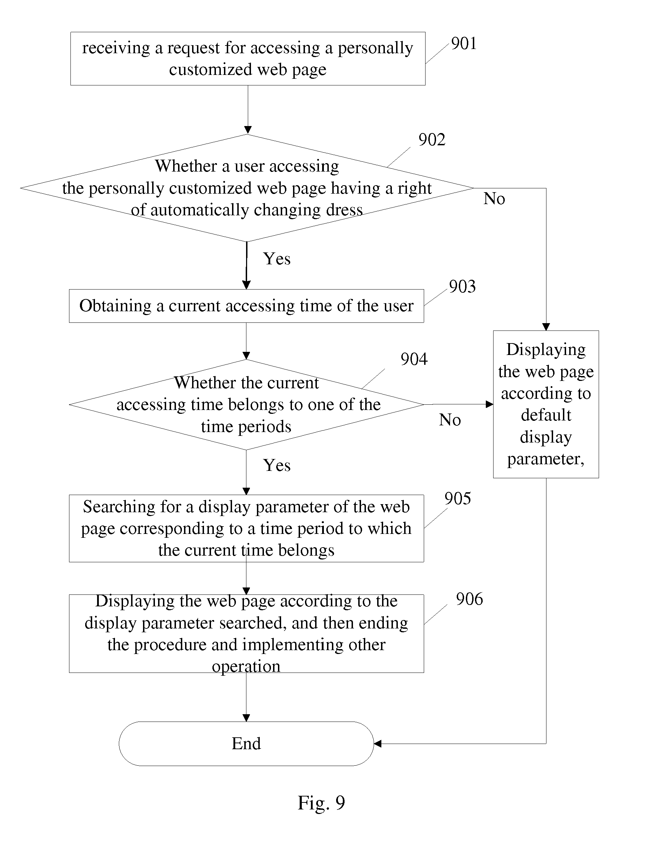

Referring to FIG.9, FIG.9 is a flowchart of a web page display method according to yet another exemplary embodiment of present disclosure. As shown in FIG.9, the web page display method mainly includes the following steps.

Step 901, receiving a request for accessing a personally customized web page. The request can be sent by the user himself or other user.

Step 902, determining whether a user accessing the personally customized web page having a right of automatically changing dress. If the user accesses the personally customized web page having a right of automatically changing dress, a step 903 is implemented; otherwise, displaying the web page according to default display parameter, and ending the procedure and implementing other operation.

Step 903, obtaining a current accessing time of the user.

Step 904, searching for time period information corresponding to the saved display parameter of the user, and determining whether the current accessing time belongs to one of the time periods. If the current accessing time is determined to be belonged to one of the time periods, a step 905 is implemented; otherwise, displaying the web page according to default display parameter, and ending the procedure and implementing other operation.

Step 905, searching for a display parameter of the web page corresponding to a time period to which the current time belongs.

Step 906, displaying the web page according to the display parameter searched, and then ending the procedure and implementing other operation.

Herein, the display parameter includes an icon of the web page component which needs to be displayed and display area information. A detailed method of realizing the step 906 is calling display interface information of web page component corresponding to the icon of the web page component which needs to be displayed, and displaying the display interface of the web page component in corresponding area according to display area information of the web page component.

The display parameter further includes format information of the web page. And a detailed method of realizing the step 906 includes: making layout to the web page according to the format information of the web page, calling display interface information of corresponding web page component, and displaying the display interface of the web page component in corresponding area according to display area information of the web page component.

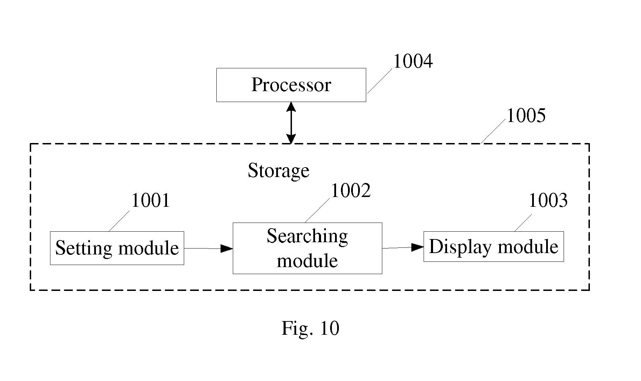

Referring to FIG.10, FIG.10 is a schematic diagram of a web page display system according to another exemplary embodiment of present disclosure. As shown in FIG.10, the web page display system includes a processor 1004 and a storage1005.

The storage 1005 can include the following modules.

A setting module 1001, configured to set and save for a web page a display parameter corresponding to a different time period.

A searching module 1002, configured to search for a display parameter of the web page corresponding to a time period to which the current time belongs, when a request for accessing the web page is received.

A display module 1003, configured to display the web page according to the display parameter searched by the searching module 1002.

The processor 1004 can be a general processor, or a programmable processor, or a micro processor, etc.

The storage 1005 can be a floppy disk, a hard disk, a photo magnetic disk, a compact disk, a magnetic tape, a nonvolatile memory card, and a read only memory (ROM).

In the exemplary embodiments of present disclosure, the user only needs to set the display parameter of each time period one time. When the user or other visitor accesses the personally customized web page, the web page is automatically displayed according to the time period. Thus, the user does not need to reset the display parameter, and a need of displaying different web page in different time period is satisfied. Compared with current technology, the present disclosure can facilitate user operation and improve the operation efficiency. Further, a personalized display need in different time period is satisfied.

Moreover, the display parameter of different time period does not need to be re-modified and resaved, human-computer interaction times are reduced, and an occupation of the computer resource is reduced.

It is important to point that not all of the steps and the modules are necessary, some steps or some module can be omitted according to actual need. The execution sequence of the steps is not fixed, and an adjustment of the steps can be made. A division of each module adopts a functional division for a convenience description. In actual implement, the function of a module can be realized by several modules, and the functional of several modules can be realized by a module. The several modules can be located in a same device, or can be located in different devices. Moreover, the terms such as the first, the second in the above description are only used to distinguish different objects, and the terms does not have a practical significance.

Each module in the above embodiments may be accomplished by using a mechanical method or an electronic method. The module can include a specialized permanent circuit or a logic device to achieve the purpose. The logic device can be a specialized processor, such as a field programmable gate array (FPGA) or an application specific integrated circuit (ASIC). The module can be a programmable logic device (PLD) or circuit temporarily formed by software, such as a general processor. In a mechanical method, the module can be a specialized by a permanent circuit or a circuit temporarily formed by software.

A computer-readable storage medium is provided in the present disclosure. The computer-readable storage medium is configured for storing instructions of implementing the above method. In detail, computer programs are stored in the computer-readable storage medium, and executed by at least one processor of the computer such as a central processing unit (CPU), micro processing unit (MPU).

In this conduction, the programs stored in the computer-readable storage medium can implement part or all of the method described above. Thus, the programs and the computer-readable storage medium server as part of the invention.

The computer-readable storage medium may include software disk, hardware disk, magneto optical disk, compact disc read only memory (CD-ROM), compact disc recordable (CD-R), compact disk rewritable (CD-R), digital video disc read only memory (DVD-ROM), digital video disc random access memory (DVD-RAM), digital video disc-rewritable (DVD-RW), digital video disc+rewritable (DVD+RW). The programs may be downloaded from a server via the commutation network.

A person having an ordinary skill in the art can realize that part or whole of the processes in the methods according to the above embodiments may be implemented by a computer instructing relevant hardware.

Further, the programs read from the computer readable storage medium are written into the storage of an extension plate of the computer. Then part or whole of the processes in the methods according to the above embodiments may be implemented by a central processor unit (CPU) of the extension plate.

The foregoing descriptions are merely exemplary embodiments of the present invention, but not intended to limit the protection scope of the present disclosure. Any variation or replacement made by persons of ordinary skills in the art without departing from the spirit of the present disclosure shall fall within the protection scope of the present disclosure. Therefore, the scope of the present disclosure shall be subject to be appended claims.

## Claims

1. A web page display method, comprising:
saving for a web page display parameters corresponding to time periods, each display parameter corresponding to one time period;
receiving a request for accessing the web page;
searching for, from the display parameters saved, a display parameter of the web page corresponding to a time period to which the current time belongs; and
displaying the web page according to the display parameter searched.

2. The web page display method according to claim 1, wherein the display parameter comprises an icon of a web page component and display area information; and
the step of displaying the web page according to the display parameter searched comprises: obtaining display interface information of the web page component according to the icon of the web page component of the display parameter, and displaying a display interface of the web page component in corresponding area according to display area information of the web page component.

3. The web page display method according to claim 2, wherein the display parameter further comprises format information of the web page; the step of displaying the web page according to the display parameter searched comprises:
making layout to the web page according to the format information of the web page.

4. The web page display method according to claim 1, wherein the step of saving for a web page display parameters corresponding to time periods, each display parameter corresponding to one time period, comprises:
providing a setting interface for the user, the setting interface comprising default time periods and corresponding display parameter setting icons; and
obtaining the display parameter from a setting instruction of the user, and saving the display parameter associated with corresponding time period.

5. The web page display method according to claim 1, wherein the step of saving for a web page display parameters corresponding to time periods, each display parameter corresponding to one time period, comprises:
providing a setting interface, the setting interface comprising a time period setting option and a corresponding display parameter setting option;
obtaining a time period according to a setting instruction of the time period setting option; and
obtaining the display parameter corresponding to the time period according to a setting instruction of the display parameter setting option corresponding to the time period setting option, and saving the display parameter associated with a corresponding time period.

6. The web page display method according to any claim of claim 4 or claim 5, further comprising:
after the step of obtaining the display parameter according to a setting instruction of the user, detecting whether the web page components to be displayed of the display parameter conflicts with each other; if there being a conflict, the step of saving the display parameter associated with corresponding time period being not implemented; otherwise, the step of saving the display parameter associated with corresponding time period being implemented.

7. The web page display method according to any claim of claim 4 or claim 5, further comprising:
after the step of obtaining the display parameter according to a setting instruction of the user, detecting whether the user is authorized to set the display parameter; if the user is authorized to set the display parameter, the step of saving the display parameter associated with a corresponding time period being implemented; otherwise, saving the set display parameter and corresponding time period.

8. The web page display method according to any claim of claim 1 to claim 5, wherein the web page is a personally customized web presence of a social network service system.

9. A web page display system, comprising:
a setting module, configured to save for a web page display parameters, each display parameter corresponding to one time period;
a searching module, configured to search for, from the display parameters saved, a display parameter of the web page corresponding to a time period to which the current time belongs, when a request for accessing the web page is received; and
a display module, configured to display the web page according to the display parameter searched by the searching module.

10. The web page display system according to claim 9, wherein the display parameter comprises an icon of a web page component and display area information; and
the display module is detailed configured to obtain display interface information of the web page component according to the icon of the web page component of the display parameter, and display a display interface of the web page component in corresponding area according to display area information of the web page component.

11. The web page display system according to claim 9, wherein the display parameter further comprises format information of the web page; and
the display is detailed configured to make layout to the web page according to the format information of the web page; call display interface information of web page component corresponding to the icon of the web page component which is needed to be displayed, and display the display interface of the web page component in corresponding area according to display area information of the web page component.

12. The web page display system according to claim 9, wherein the web page display system is set in a social network service system, and the webpage display system is configured to display a personally customized web presence of the social network service system.
